# EUROPÄISCHE PATENTSCHRIFT

(11) **EP 3 679 339 B1**
(45) Veröffentlichungstag und Bekanntmachung des Hinweises auf die Patenterteilung: **19.07.2023**
(21) Anmeldenummer: 18765419.9
(22) Anmeldetag: 03.09.2018
(51) Int. Cl.: G01M 3/00, G01M 3/02, G01M 3/24, G01N 25/72

(54) **VERFAHREN UND VORRICHTUNG ZUR DETEKTION EINER LECKAGE**
METHOD AND DEVICE FOR DETECTING A LEAKAGE
PROCÉDÉ ET DISPOSITIF DE DÉTECTION D'UNE FUITE

(30) Priorität: 04.09.2017 DE 102017120272
(43) Veröffentlichungstag der Anmeldung: 15.07.2020
(73) Patentinhaber: Deutsches Zentrum für Luft- und Raumfahrt e.V., 51147 Köln (DE); Airbus Operations GmbH, 21129 Hamburg (DE)
(72) Erfinder: UCAN, Hakan, 21680 Stade (DE); HASCHENBURGER, Anja, 21682 Stade (DE); HEIM, Clemens, 21682 Stade (DE); HESSE, Jan Timo, 21726 Oldendorf (DE)
(74) Vertreter: Gramm, Lins & Partner Patent- und Rechtsanwälte PartGmbB
(86) Internationale Anmeldenummer: PCT/EP2018/073626
(87) Internationale Veröffentlichungsnummer: WO 2019/043227

(56) Entgegenhaltungen:
- WO-A1-2017/032741
- US-A1- 2009 273 107
- US-A1- 2013 330 832
- US-A1- 2014 061 962
- US-A1- 2016 349 139

## Beschreibung

Die Erfindung betrifft ein Verfahren zum Detektieren einer Leckage an einem Vakuumaufbau, insbesondere zur Herstellung eines Faserverbundbauteils aus einem Fasermaterial und einem Matrixmaterial, gemäß dem Oberbegriff des Patentanspruches 1. Die Erfindung betrifft ebenso ein Verfahren zur Herstellung eines Faserverbundbauteils mit einer solchen Leckage-Erkennung.

Aufgrund der gewichtsspezifischen Festigkeit und Steifigkeit eignen sich Faserverbundbauteile, die aus einem Faserverbundwerkstoff hergestellt sind, insbesondere für den Aspekt des Leichtbaus und sind daher aus der Luft- und Raumfahrt sowie der Automobilindustrie kaum mehr wegzudenken. Faserverbundwerkstoffe haben dabei als Hauptbestandteil ein Fasermaterial und ein Matrixmaterial, welches das Fasermaterial benetzt und nach dem Aushärten eine integrale Einheit mit dem Fasermaterial eingeht. Hierdurch wird das Fasermaterial in seine vorgegebene Richtung zwecks Lastabtragung gezwungen.

Ein weit verbreiteter Herstellungsprozess ist dabei die Vakuuminfiltration, bei dem das Fasermaterial meist auf einem Formwerkzeug abgelegt und mittels eines Vakuumaufbaus vakuumdicht verschlossen wird. Anschließend wird das vakuumdicht abgeschlossene Fasermaterial evakuiert, so dass aufgrund des Druckgradienten zwischen Fasermaterial und äußerer Umgebung das Matrixmaterial in das Fasermaterial infiltriert werden kann. Anschließend kann das Matrixmaterial beispielsweise in einem Autoklaven ausgehärtet und so das Bauteil hergestellt werden.

Aber auch bei der Herstellung von Faserverbundbauteilen mittels Prepregs wird ein Vakuumaufbau relevant, da für die Autoklavaushärtung ebenfalls ein vakuumdichter Aufbau notwendig ist, um eine gleichmäßige Druckübertragung auf das Bauteil zu gewährleisten.

Ein derartiger Vakuumaufbau besteht dabei in der Regel aus einer Vakuumabdeckung, beispielsweise einer Vakuumfolie oder einer Vakuumhaube, die meist mit Hilfe entsprechender Klebemittel (Siegelkit) mit dem Formwerkzeug verklebt und luftdicht abgeschlossen wird.

Kommt es während des Prozesses dabei zu einer Leckage an dem Vakuumaufbau, so ist mit einer starken Beeinträchtigung der Bauteilqualität oder gar dem Ausschluss des Bauteils zu rechnen. Eine solche Beschädigung hat dabei hohe Kosten und eine Verzögerung des Arbeitsablaufes zur Folge.

Aus der Praxis sind dabei Verfahren zur Leckage-Erkennung bekannt, bei denen beispielsweise mittels einer Unterdruckmessung auf eine Leckage geschlossen wird. Verändert sich nach Einstellung des Vakuums die angelegte Druckdifferenz, so muss mit einer Undichtigkeit gerechnet werden. Auch das Absuchen des Aufbaus mit Hilfe eines akustischen Leckagegerätes ist bekannt.

Die Verfahren haben jedoch den Nachteil, dass sie für Großbauteile, wie beispielsweise Rotorblätter für Windkraftanlagen oder Flügelschalen für Flugzeuge, gänzlich ungeeignet sind, da sie entweder nur feststellen, ob eine Leckage vorliegt, jedoch nicht, wo diese sich befindet oder weil deren Einsatz schlicht zu langwierig ist und den Prozessablauf nur unnötigerweise verlängert.

Aus der DE 10 2011 100 096 B4 ist beispielsweise ein Verfahren zum Erkennen einer Leckage an einem vakuumabgedichteten Aufbau bekannt, bei dem mit Hilfe eines thermografischen Bildsensors eine Temperaturdifferenz an einem vakuumabgedichteten Aufbau ermittelt und dann eine Leckage erkannt wird, da die aufgrund der Leckage in das Fasermaterial einströmende Umgebungsluft eine Temperaturdifferenz innerhalb des Vakuumaufbaus erzeugt. Allerdings eignet sich auch dieses Verfahren nicht für flächige Großbauteile, da mit Hilfe des thermografischen Bildsensors nicht die gesamte Fläche prozessiger erfasst werden kann und somit zeitaufwendig abgescannt werden muss.

Aus der US 2014 / 0 061 962 A1 ist ein Verfahren zur Ermittlung einer Leckage bekannt, bei dem charakteristische Parameter der evakuierten Luft gemessen und dann eine Leckage erkannt sowie mittels Triangulation eine Ortung der Leckage durchgeführt wird.

Aus der WO 2017/032741 A1) ist eine Messvorrichtung und ein Verfahren zum Erkennen von Leckagen an einem Vakuumaufbau bekannt, wobei mithilfe von Drucksensoren (piezoelektrischen Sensoren) ein Druckverlauf detektiert und anhand des Druckverlaufes dann auf den Ort der Leckage geschlossen werden soll.

Es ist daher Aufgabe der vorliegenden Erfindung ein verbessertes Verfahren und eine hierzu korrespondierende Vorrichtung anzugeben, mit der eine Leckage an einem Vakuumaufbau auch bei sehr großen Bauteilen schnell und sicher erkannt werden kann.

Die Aufgabe wird mit den Merkmalen des kennzeichnenden Teils des Anspruchs 1 erfindungsgemäß gelöst.

Demzufolge wird ein zweistufiger Erkennungsprozess vorgeschlagen, wobei in dem ersten Detektionsprozess zunächst ein Leckagebereich global ermittelt wird, innerhalb dessen die Leckage dann vermutet wird, während in einem zweiten Detektionsprozess dann dieser Leckagebereich genauer untersucht und lokalisiert, d.h. die Position bestimmt, wird.

Für den ersten Detektionsprozess wird dabei ein Vakuumaufbau bereitgestellt, der eine Mehrzahl von Sensoren zum Erfassen eines Parameters aufweist. Diese Sensoren können dabei in die Vakuumabdeckung oder auch in das Formwerkzeug integriert sein. Unter einem Vakuumaufbau im Sinne der vorliegenden Erfindung wird dabei verstanden, dass durch eine entsprechende Abgrenzung eine innere Kavität erzeugt wird, die mit Hilfe einer Drucksenke evakuierbar ist. Bei der Herstellung eines Faserverbundbauteils kann dabei ein solcher Vakuumaufbau aus einer formgebenden Werkzeugoberfläche eines Formwerkzeuges und der darauf aufgebrachten Vakuumfolie sowie den weiteren Bestandteilen zur Abdichtung des Vakuumaufbaus gebildet werden. Ein solcher Parameter kann beispielsweise ein physikalischer Parameter sein.

Anschließend werden über die Zeit während des Evakuierens der Kavität des Vakuumaufbaus von jedem Sensor entsprechende Werte des Parameters ermittelt, so dass nach Ablauf einer gewissen Zeitspanne für jeden Sensor eine Mehrzahl von Werten des Parameters vorliegen. Aus diesen Werten wird sodann für jeden Sensor ein Wert-Zeit-Verlauf erstellt, der für jeden Sensor die Werteentwicklung des Parameters während des Evakuierens der Kavität angibt. Diese erstellten Wert-Zeit-Verläufe werden nun miteinander verglichen, wobei bei diesem Vergleich der Wert-Zeit-Verläufe der einzelnen Sensoren Unterschiede festgestellt werden können, wenn sich eine Leckage innerhalb des Vakuumaufbaus zeigt. Basierend auf diesen Unterschieden der Wert-Zeit-Verläufe untereinander lässt sich dann ein Leckagebereich an dem Vakuumaufbau ermitteln, innerhalb dessen die Leckage vermutet wird. Der Leckagebereich lässt sich dabei derart genau eingrenzen, dass dieser mit Hilfe eines weiteren Detektionsprozesses sicher und schnell untersucht werden kann. Er istjedoch nicht so genau, dass es für eine händische bzw. manuelle Untersuchung zeitlich ausreichend ist.

Im zweiten Detektionsprozess wird nun der im ersten Detektionsprozess ermittelte Leckagebereich mit Hilfe einer zusätzlichen Detektionsvorrichtung analysiert und dann die Leckage innerhalb des Leckagebereiches detektiert, d. h. deren Position in Bezug zu einem Referenz-Koordinatensystem oder Referenzpunkt ermittelt. Eine solche Detektionsvorrichtung kann beispielsweise das aus der DE 10 2011 100 096 B4 bekannte System zur Erkennung von Leckagen mit Hilfe von Thermografie sein.

Die Erfinder haben dabei erkannt, dass sich mit Hilfe des ersten Detektionsprozesses ein Leckagebereich feststellen lässt, innerhalb dessen die Leckage vorliegt, so dass dieser Leckagebereich dann schnell und effizient mit Hilfe einer Detektionsvorrichtung in einem zweiten Detektionsprozess erkennen und orten lässt, so dass hierdurch insbesondere Großbauteile wie Rotorblätter für Windkraftanlagen oder Flügelschalen bzw. Rumpfschalen von Flugzeugen untersuchen lassen, die nicht selten Abmessungen von mehr als 100 m aufweisen.

Die Detektionsvorrichtung für den zweiten Detektionsprozess kann dabei insbesondere eine Thermografie-Kamera sowie eine Auswerteeinheit beinhalten, wobei der Leckagebereich dann mit Hilfe der Thermografie-Kamera aufgenommen und die Bilddaten dann mit Hilfe der Auswerteeinheit analysiert werden, wobei dann die Leckage, basierend auf Temperaturunterschieden in den Bilddaten, festgestellt wird. Zusätzlich ist es denkbar, dass der Vakuumaufbau und/oder die Umgebungsluft zusätzlich temperiert wird, um eventuelle Temperaturunterschiede basierend auf einer Leckage im Vakuumaufbau besser hervorheben zu können. Auf den Inhalt der DE 10 2011 100 096 B4 wird dabei vollumfänglich Bezug genommen.

Der zu erfassende Parameter kann dabei beispielsweise der Schall, die Kraft oder der Durchfluss des Matrixmaterials sein. So ist es denkbar, dass in dem Vakuumaufbau an verschiedenen Positionen über den gesamten Vakuumaufbau hinweg mehrere Schallsensoren verteilt sind, die beginnend mit der Evakuierung gleichzeitig entsprechende Werte erfassen und diese an eine Auswerteeinheit übermitteln. Entsteht nun eine Leckage innerhalb des Vakuumaufbaus, so lässt sich dies durch einen entsprechend charakteristischen Wert-Zeit-Verlauf des Schallsignals feststellen, da sich die Amplitude des Schallsignals ändert. Werden nun die einzelnen Schallsignalverläufe der Sensoren untereinander verglichen, so kann anhand der Phasenabweichung des Signals die ungefähre Position innerhalb des Vakuumaufbaus detektiert werden und somit der Leckagebereich ermittelt werden.

Selbiges gilt auch für den Parameter Kraft, der beispielsweise die auf den Vakuumaufbau wirkende Kraft meint, die sich ebenfalls über die Zeit während des Evakuierens bei Bestehen einer Leckage charakteristisch verändert und bei der ebenfalls anhand einer Phasenabweichung der einzelnen Kraftsignalverläufe der Leckagebereich ermitteln lässt.

So ist es beispielsweise vorteilhaft, wenn die einzelnen Wert-Zeit-Verläufe hinsichtlich ihres Verlaufes normiert werden, um so die Phasendifferenz des zeitabhängigen Signals feststellen zu können.

Dabei ist es vorteilhaft, wenn insbesondere die Amplitude und/oder die Zeit zur Feststellung der Unterschiede verglichen werden. Vorteilhaft ist hierbei außerdem, wenn ein Wert-Zeit-Verlauf als Referenzverlauf festgelegt wird, gegen den dann die übrigen Wert-Zeit-Verläufe verglichen und die Unterschiede festgestellt werden.

In weiteren vorteilhaften Ausführungsform wird die zusätzliche Detektionsvorrichtung so bereitgestellt, dass diese einen Erfassungsbereich hat, innerhalb dessen die Detektionsvorrichtung zum Detektieren einer Leckage ausgebildet ist, wobei die Detektionsvorrichtung derart ausgerichtet wird, dass der Erfassungsbereich zumindest teilweise innerhalb des Leckagebereiches liegt.

Je nach Größe des Leckagebereiches ist es dabei denkbar, dass die Detektionsvorrichtung so bewegt wird, dass der Erfassungsbereich der Detektionsvorrichtung innerhalb des Leckagebereiches verfahren wird.

Im Übrigen wird die Aufgabe auch mit dem Verfahren zur Herstellung eines Faserverbundbauteils gemäß Anspruch 8 erfindungsgemäß gelöst, wobei das Verfahren während der Herstellung des Faserverbundbauteils eine Leckageerkennung mithilfe des vorstehend beschriebenen Verfahrens durchführt.

Die Erfindung wird anhand der beigefügten Figur beispielhalft erläutert. Es zeigt:

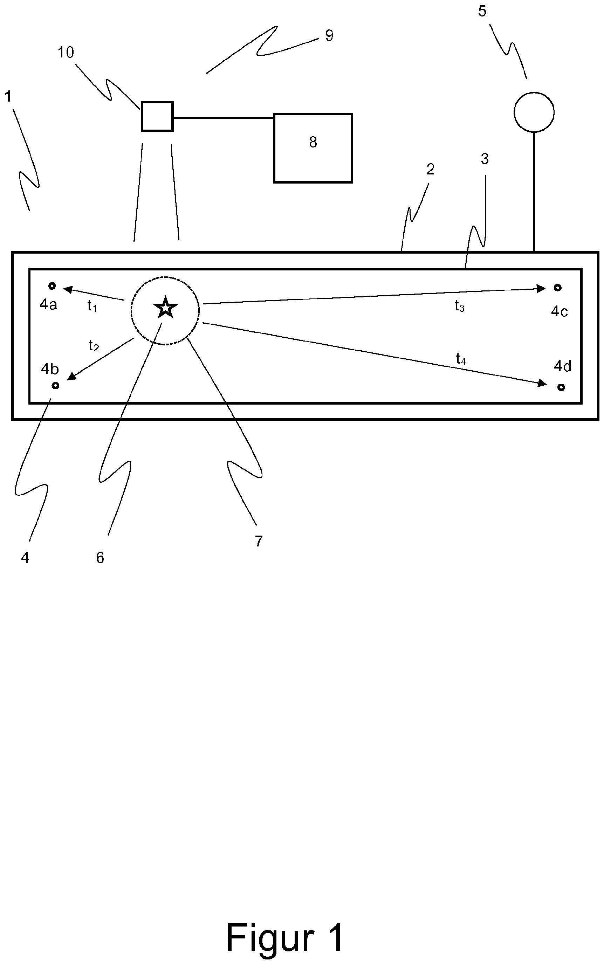

- Figur 1: Schematische Darstellung des erfindungsgemäßen Verfahrens während der Herstellung eines Faserverbundbauteils.

Figur 1 zeigt in einer schematisch stark vereinfachten Form das Wirkprinzip der vorliegenden Erfindung. Hierbei wird zunächst ein Vakuumaufbau 1 bereitgestellt, der ein Formwerkzeug 2 und eine Abdeckung 3 hat. In dem Formwerkzeug 2 des Vakuumaufbaus 1 sind dabei mehrere Schallsensoren 4 eingearbeitet, die zum Erfassen eines Schallsignals innerhalb des Vakuumaufbaus 1 ausgebildet sind.

Mithilfe einer mit dem Vakuumaufbau 1 verbundenen Drucksenke 5 wird nun die Kavität innerhalb des Vakuumaufbaus 1 evakuiert, um so eine Druckdifferenz zwischen der Umgebungsluft und dem Inneren des Vakuumaufbaus 1 herstellen zu können. Im Ausführungsbeispiel der Figur 1 befindet sich dabei innerhalb des Vakuumaufbaus eine Leckage 6, durch die während des Evakuierens des Vakuumaufbaus 1 mithilfe der Drucksenke 5 Umgebungsluft eingesaugt wird.

Aufgrund der Leckage 6 wird nun während des Evakuierens des Vakuumaufbaus 1 und des Zustromes von Außenluft durch die Leckage 6 ein Schallsignal erzeugt, welches von den vier Schallsensoren 4a bis 4d empfangen wird. Das Schallsignal wird dabei aufgrund der Position der Leckage 6 in Bezug auf den Vakuumaufbau 1 zu jeweils unterschiedlichen Zeitpunkten t₁ bis t₄ empfangen, was durch einen Vergleich der Schallsignalverläufe jedes einzelnen Sensors 4a bis 4d festgestellt werden kann. So braucht das Schallsignal der Leckage 6 in Bezug auf den Schallsensor 4a die Zeitspanne t₁, während der zweite Schallsensor 4b das Schallsignal nach t₂ empfängt. Selbiges gilt für den dritten Sensor 4c und den vierten Sensor 4d.

Aufgrund der Signalverläufe lässt sich nun eine Phasenverschiebung und somit Unterschiede in der Laufzeit des Schallsignals, welches aufgrund der Leckage 6 erzeugt wird, feststellen, wobei basierend auf diesen Laufzeitunterschieden dann ein Leckagebereich 7 feststellbar ist, innerhalb dessen die Leckage 6 vermutet wird. Das Berechnen des Leckagebereiches 7 basierend auf den Signalverläufen der Sensoren 4a bis 4d kann dabei mithilfe einer Auswerteeinheit 8 erfolgen, die mit den Sensoren 4a bis 4d in Verbindung steht. Hierbei ist es denkbar, dass die Auswerteeinheit 8 ebenfalls mit der Drucksenke 5 beziehungsweise mit dessen Steuerung in Verbindung steht, um so die von den Sensoren ermittelten Werte entsprechend auf den Beginn der Evakuierung durch die Drucksenke 5 normieren zu können.

Nachdem nun der Leckagebereich 7 mithilfe der Schallsensoren 4 festgelegt wurde, wird sodann mithilfe einer weiteren Detektionsvorrichtung 9 der Leckagebereich 7 untersucht. Bei der Detektionsvorrichtung 9 handelt es sich im Ausführungsbeispiel der Figur 1 um eine Vorrichtung zur Durchführung eines Thermographieverfahrens, bei dem der Leckagebereich 7 mithilfe einer Thermographiekamera 10 aufgenommen wird. Aus den im Leckagebereich 7 erkennbaren Temperaturdifferenzen lässt sich sodann die Position der Leckage sehr genau orten und positionsgenau detektieren, so dass insbesondere bei großflächigen Bauteilen innerhalb kürzester Zeit die Leckage 6 auffindbar ist.

Dabei verändert sich das Schallsignal bei Bestehen einer Leckage 6 entsprechend derart charakteristisch, dass dies innerhalb des Signalverlaufes sofort erkennbar ist. Denn ohne Leckage 6 wäre allenfalls das Geräusch bezüglich der Drucksenke 5 zu detektieren, während mit der Leckage 6 durch das Einströmen der Nebenluft ein entsprechendes charakteristisches Schallsignal ausgebildet wird. Eine solche charakteristische Abweichung von dem Schallsignal ohne Leckage ist beispielsweise die NichtLinearität beziehungsweise die Abweichung von dem linearen Verlauf des Schallsignals ohne Leckage.

### Bezugszeichen

- 1: Vakuumaufbau
- 2: Formwerkzeug
- 3: Vakuumabdeckung
- 4: Schallsensoren
- 5: Drucksenke
- 6: Leckage
- 7: Leckagebereich
- 8: Auswerteeinheit
- 9: Detektionsvorrichtung
- 10: Thermographiekamera

## Patentansprüche

1. Verfahren zum Detektieren einer Leckage (6) an einem Vakuumaufbau (1), mit den Schritten:
- Durchführen eines ersten Detektionsprozesses zur Ermittlung eines Leckagebereiches (7) mit
∘ Bereitstellen eines Vakuumaufbaues (1), der eine Mehrzahl von Sensoren (4) zum Erfassen eines physikalischen Parameters aufweist,
∘ Ermitteln von Werten des Parameters über die Zeit während des Evakuierens einer Kavität des Vakuumaufbaues (1),
∘ Erstellen eines Wert-Zeit-Verlaufes für jeden Sensor (4) des Vakuumaufbaues (1) aus den ermittelten Werten der jeweiligen Sensoren (4) mittels einer Auswerteeinheit (8),
∘ Vergleichen der erstellten Wert-Zeit-Verläufe miteinander und Feststellen von Unterschieden in Abhängigkeit von dem Vergleich mittels der Auswerteeinheit (8), und
o Ermitteln eines Leckagebereiches (7) an dem Vakuumaufbau (1) in Abhängigkeit von den festgestellten Unterschieden der Wert-Zeit-Verläufe und der jeweiligen Position des Sensors (4) bzgl. des Vakuumaufbaus (1);
**gekennzeichnet durch**
- Durchführen eines zweiten Detektionsprozesses nach dem ersten Detektionsprozess zur Detektion der Leckage (6) innerhalb des ermittelten Leckagebereiches (7) mit
∘ Bereitstellen einer zusätzlichen Detektionsvorrichtung (9, 10), die zum Erkennen einer Leckage (6) an einem Vakuumaufbau (1) ausgebildet ist, und
∘ Detektieren einer Leckage (6) innerhalb des Leckagebereiches (7) mittels der Detektionsvorrichtung (9, 10).

2. Verfahren nach Anspruch 1, **dadurch gekennzeichnet, dass** die zusätzliche Detektionsvorrichtung (9, 10) derart bereitgestellt wird, dass diese einen Erfassungsbereich hat, innerhalb dessen die Detektionsvorrichtung (9, 10) zum Detektieren einer Leckage (6) ausgebildet ist, wobei die Detektionsvorrichtung (9, 10) derart ausgerichtet wird, dass der Erfassungsbereich zumindest teilweise innerhalb des Leckagebereiches (7) liegt.

3. Verfahren nach Anspruch 2, **dadurch gekennzeichnet, dass** der Erfassungsbereich innerhalb des Leckagebereiches (7) verfahren wird.

4. Verfahren nach einem der vorhergehenden Ansprüche, **dadurch gekennzeichnet, dass** die zusätzliche Detektionsvorrichtung (9, 10) derart bereitgestellt wird, dass diese zum Erkennen einer Leckage (6) mittels Thermographie ausgebildet ist.

5. Verfahren nach einem der vorhergehenden Ansprüche, **dadurch gekennzeichnet, dass** der zu erfassende physikalische Parameter der Schall, die Kraft oder der Durchfluss ist.

6. Verfahren nach einem der vorhergehenden Ansprüche, **dadurch gekennzeichnet, dass** die erstellten Wert-Zeit-Verläufe hinsichtlich ihres charakteristischen Verlaufes normiert und so zu Feststellung von Unterschieden verglichen werden.

7. Verfahren nach Anspruch 6, **dadurch gekennzeichnet, dass** die Wert-Zeit-Verläufe bzgl. Amplitude und/oder Zeit verglichen werden, wobei in Abhängigkeit von den Unterschieden hinsichtlich Amplitude und/oder Zeit dann der Leckagebereich (7) ermittelt wird.

8. Verfahren zur Herstellung eines Faserverbundbauteils aus einem Fasermaterial und einem Matrixmaterial, wobei das Fasermaterial in eine Kavität eines Vakuumaufbaus (1) eingebracht, mit dem Matrixmaterial infiltriert und ausgehärtet wird, **dadurch gekennzeichnet, dass** während des Evakuierens der Kavität des Vakuumaufbaus ein Verfahren zum Detektieren einer Leckage (6) an diesem Vakuumaufbau (1) nach einem der vorherigen Ansprüche durchgeführt wird.

## Claims

1. A method of detecting leakage (6) from a vacuum assembly (1), comprising the steps:
- Carrying out a first detection process to determine a leakage area (7) with
o Providing a vacuum assembly (1) having a plurality of sensors (4) for sensing a physical parameter,
o Determining values of the parameter over time during evacuation of a cavity of the vacuum assembly (1),
∘ Creating a value-time curve for each sensor (4) of the vacuum assembly (1) from the determined values of the respective sensors (4) by means of an evaluation unit (8),
∘ Comparing the created value-time curves with each other and determining differences depending on the comparison by means of the evaluation unit (8), and
∘ Determining a leakage area (7) at the vacuum assembly (1) as a function of the detected differences in the value-time curves and the respective position of the sensor (4) with respect to the vacuum assembly (1);
**characterized by**
- Carrying out a second detection process after the first detection process to detect the leakage (6) within the determined leakage area (7) with
o Providing an additional detection device (9, 10) adapted to detect a leakage (6) from a vacuum assembly (1), and
o Detecting a leakage (6) within the leakage area (7) by means of the detection device (9, 10).

2. A method according to claim 1, **characterized in that** the additional detection device (9, 10) is provided such that it has a detection area in which the detection device (9, 10) is adapted to detect a leakage (6), wherein the detection device (9, 10) is oriented such that the detection area is at least partially within the leakage area (7).

3. Method according to claim 2, **characterized in that** the detection area is moved within the leakage area (7).

4. A method according to any one of the preceding claims, **characterized in that** the additional detection device (9, 10) is provided such that it is designed to detect a leakage (6) by means of thermography.

5. Method according to any one of the preceding claims, **characterized in that** the physical parameter to be detected is sound, force or flow.

6. Method according to one of the preceding claims, **characterized in that** the created value-time curves are normalized with respect to their characteristic curve and thus compared to determine differences.

7. Method according to claim 6, **characterized in that** the value-time curves are compared with respect to amplitude and/or time, the leakage area (7) then being determined as a function of the differences with respect to amplitude and/or time.

8. Method of manufacturing a fiber composite component from a fiber material and a matrix material, wherein the fiber material is introduced into a cavity of a vacuum assembly (1), infiltrated with the matrix material and cured, **characterized in that** during the evacuation of the cavity of the vacuum assembly, a method of detecting a leakage (6) at this vacuum assembly (1) according to one of the preceding claims is carried out.

## Revendications

1. Procédé de détection d'une fuite (6) au niveau d'une structure à vide (1), comprenant les étapes consistant à :
- effectuer un premier processus de détection pour déterminer une zone de fuite (7), consistant à
o fournir une structure à vide (1) comprenant une pluralité de capteurs (4) pour saisir un paramètre physique,
o déterminer les valeurs du paramètre en fonction du temps pendant la mise sous vide d'une cavité de la structure à vide (1),
o établir une courbe valeurs-temps pour chaque capteur (4) de la structure à vide (1) à partir des valeurs déterminées des capteurs respectifs (4) au moyen d'une unité d'évaluation (8),
o comparer les courbes valeurs-temps établies entre elles et constater les différences en fonction de la comparaison au moyen de l'unité d'évaluation (8), et
∘ déterminer une zone de fuite (7) au niveau de la structure à vide (1) en fonction des différences constatées entre les courbes valeurs-temps et la position respective du capteur (4) par rapport à la structure à vide (1) ;
**caractérisé par** l'étape consistant à
- effectuer un deuxième processus de détection après le premier processus de détection pour détecter la fuite (6) à l'intérieur de la zone de fuite (7) déterminée, consistant à
o fournir un dispositif de détection supplémentaire (9, 10) qui est réalisé pour détecter une fuite (6) au niveau d'une structure à vide (1), et
o détecter une fuite (6) à l'intérieur de la zone de fuite (7) au moyen du dispositif de détection (9, 10).

2. Procédé selon la revendication 1,
**caractérisé en ce que** le dispositif de détection supplémentaire (9, 10) est fourni de manière à présenter une zone de saisie à l'intérieur de laquelle le dispositif de détection (9, 10) est conçu pour détecter une fuite (6), le dispositif de détection (9, 10) étant orienté de telle sorte que la zone de saisie se trouve au moins partiellement à l'intérieur de la zone de fuite (7).

3. Procédé selon la revendication 2,
**caractérisé en ce que** la zone de saisie est déplacée à l'intérieur de la zone de fuite (7).

4. Procédé selon l'une des revendications précédentes,
**caractérisé en ce que** le dispositif de détection supplémentaire (9, 10) est fourni de manière à être apte à reconnaître une fuite (6) par thermographie.

5. Procédé selon l'une des revendications précédentes,
**caractérisé en ce que** le paramètre physique à saisir est le son, la force ou le débit.

6. Procédé selon l'une des revendications précédentes,
**caractérisé en ce que** les courbes valeurs-temps établies sont normalisées en ce qui concerne leur évolution caractéristique et sont ainsi comparées pour constater les différences.

7. Procédé selon la revendication 6,
**caractérisé en ce que** les courbes valeurs-temps sont comparées en termes d'amplitude et/ou de temps, la zone de fuite (7) étant alors déterminée en fonction des différences en termes d'amplitude et/ou de temps.

8. Procédé de fabrication d'un composant composite à fibres à partir d'un matériau fibreux et d'un matériau de matrice, le matériau fibreux étant introduit dans une cavité d'une structure à vide (1), imprégné avec le matériau de matrice, et durci,
**caractérisé en ce que**, pendant la mise sous vide de la cavité de la structure à vide, on met en oeuvre un procédé de détection d'une fuite (6) au niveau de ladite structure à vide (1), selon l'une des revendications précédentes.
